# EUROPÄISCHE PATENTSCHRIFT

(11) **EP 1 003 966 B1**
(45) Veröffentlichungstag und Bekanntmachung des Hinweises auf die Patenterteilung: **20.08.2003**
(21) Anmeldenummer: 99910096.9
(22) Anmeldetag: 29.01.1999
(51) Int. Cl.: F02M 61/18

(54) **BRENNSTOFFEINSPRITZVENTIL**
FUEL INJECTION VALVE
SOUPAPE D'INJECTION DE CARBURANT

(30) Priorität: 08.04.1998 DE 19815789
(43) Veröffentlichungstag der Anmeldung: 31.05.2000
(73) Patentinhaber: ROBERT BOSCH GMBH, 70442 Stuttgart (DE)
(72) Erfinder: FISCHBACH, Dirk, D-96049 Bamberg (DE); BITTER, Michael, D-74321 Bietigheim-Bissingen (DE); KOCIK, Rainer, D-96049 Bamberg (DE); DANTES, Guenter, D-71735 Eberdingen (DE); NOWAK, Detlef, D-74199 Untergruppenbach (DE); HEYSE, Joerg, D-71706 Markgröningen (DE); STAACKE, Albert, D-71711 Steinheim (DE); KLASKI, Michael, D-71723 Grossbottwar (DE)
(86) Internationale Anmeldenummer: DE9900233
(87) Internationale Veröffentlichungsnummer: WO99053191

(56) Entgegenhaltungen:
- WO-A-96/11335
- DE-A- 4 221 185
- DE-A- 19 607 288

## Beschreibung

### Stand der Technik

Die Erfindung geht aus von einem Brennstoffeinspritzventil nach der Gattung des Anspruchs 1.

Aus der DE-PS 39 43 005 ist bereits ein elektromagnetisch betätigbares Brennstoffeinspritzventil bekannt, bei dem im Sitzbereich mehrere scheibenförmige Elemente angeordnet sind. Bei Erregung des Magnetkreises wird eine als Flachanker fungierende flache Ventilplatte von einer mit ihr zusammenwirkenden gegenüberliegenden Ventilsitzplatte abgehoben, die gemeinsam ein Plattenventilteil bilden. Stromaufwärts der Ventilsitzplatte ist ein Drallelement angeordnet, das den zum Ventilsitz strömenden Brennstoff in eine kreisförmige Drehbewegung versetzt. Eine Anschlagplatte begrenzt den axialen Weg der Ventilplatte auf der der Ventilsitzplatte gegenüberliegenden Seite. Die Ventilplatte wird mit großem Spiel von dem Drallelement umgeben; eine gewisse Führung der Ventilplatte übernimmt damit das Drallelement. Im Drallelement sind an dessen unterer Stirnseite mehrere tangential verlaufende Nuten eingebracht, die vom äußeren Umfang ausgehend bis in eine mittlere Drallkammer reichen. Durch das Aufliegen des Drallelements mit seiner unteren Stirnseite auf der Ventilsitzplatte liegen die Nuten als Drallkanäle vor.

Aus der WO 96/11335 ist bereits ein Brennstoffeinspritzventil bekannt, an dessen stromabwärtigen Ende ein mehrscheibiger Zerstäubungsvorsatz mit einer Drallaufbereitung angeordnet ist. Dieser Zerstäubungsvorsatz ist stromabwärts eines in einem Ventilsitzträger eingebauten scheibenförmigen Führungselements und eines Ventilsitzes ebenfalls am Ventilsitzträger vorgesehen, wobei ein zusätzliches Stützelement den Zerstäubungsvorsatz in einer definierten Position hält. Der Zerstäubungsvorsatz ist zweischeibig bzw. vierscheibig ausgeführt, wobei die einzelnen Scheiben aus rostfreiem Stahl oder Silizium hergestellt sind. Entsprechend kommen bei der Herstellung der Öffnungsgeometrien in den Scheiben konventionelle Bearbeitungsverfahren zum Einsatz, wie Erodieren, Stanzen oder Ätzen. Jede einzelne Scheibe des Zerstäubungsvorsatzes wird separat gefertigt, wonach entsprechend der gewünschten Scheibenanzahl alle gleich großen Scheiben zur Bildung des vollständigen Zerstäubungsvorsatzes aufeinander gestapelt werden. Der Zerstäubungsvorsatz erstreckt sich senkrecht zur Ventillängsachse, er liegt also horizontal, so daß eine Abspritzung entlang der Ventillängsachse erfolgt.

In der DE-OS 196 07 288 wurde bereits die sogenannte Multilayergalvanik zur Herstellung von Lochscheiben, die insbesondere für den Einsatz an Brennstoffeinspritzventilen geeignet sind, ausführlich beschrieben. Dieses Herstellungsprinzip einer Scheibenherstellung durch mehrfaches galvanisches Metallabscheiden verschiedener Strukturen aufeinander, so daß eine einteilige Scheibe vorliegt, soll ausdrücklich zum Offenbarungsgehalt vorliegender Erfindung zählen. Die mikrogalvanische Metallabscheidung in mehreren Ebenen, Lagen bzw. Schichten kommt auch zur Herstellung der hier verwendeten und erfindungsgemäß eingebauten Zerstäuberscheiben zum Einsatz.

### Vorteile der Erfindung

Das erfindungsgemäße Brennstoffeinspritzventil mit den kennzeichnenden Merkmalen des Anspruchs 1 hat den Vorteil, daß mit ihm eine sehr hohe Zerstäubungsgüte eines abzuspritzenden Brennstoffs sowie eine an die jeweiligen Erfordernisse (z.B. Einbaubedingungen, Motorkonfigurationen, Zylinderausformungen, Zündkerzenposition) angepaßte, sehr variabel gestaltbare Strahl- bzw. Sprayformung erzielt wird. Als Konsequenz können durch die Verwendung von schräg im Brennstoffeinspritzventil eingebauten Zerstäuberscheiben u.a. die Abgasemission einer mit entsprechenden Brennstoffeinspritzventilen ausgerüsteten Brennkraftmaschine reduziert und ebenso eine Verringerung des Brennstoffverbrauchs erzielt werden.

Der Schrägeinbau der Zerstäuberscheibe ermöglicht das Erzeugen besonderer, z.B. motorspezifischer Strahlbilder und Sprayformen, was beim Einsatz des Brennstoffeinspritzventils zur Direkteinspritzung in einen Zylinder einer Brennkraftmaschine besonders vorteilhaft sein kann. Die Erzeugung von zur Ventillängsachse unter einem Winkel γ geneigten Sprays oder Strahlen (Hohl- oder Vollkegel, hoher oder geringer Strähnenanteil über den umfang, Gleich- oder Ungleichverteilung über den Umfang, nicht rotationssymmetrische (Flach-)Strahlbilder mit einstellbaren Strähnenkomponenten) auf einfache Art und Weise stellt einen außerordentlich wichtigen Vorteil des erfindungsgemäßen Brennstoffeinspritzventils dar.

Durch die in den Unteransprüchen aufgeführten Maßnahmen sind vorteilhafte Weiterbildungen und Verbesserungen des im Anspruch 1 angegebenen Brennstoffeinspritzventils möglich.

Von Vorteil ist es, die Zerstäuberscheibe in Form einer Drallscheibe auszuführen. In besonders vorteilhafter Weise ist die Drallscheibe dann mittels Multilayergalvanik hergestellt. Aufgrund ihrer metallischen Ausbildung sind die Drallscheiben sehr bruchsicher und gut montierbar. Die Anwendung der Multilayergalvanik erlaubt eine extrem große Gestaltungsfreiheit, da die Konturen der Öffnungsbereiche (Einlaßbereiche, Drallkanäle, Drallkammer, Auslaßöffnung) in der Drallscheibe frei wählbar sind. Besonders im Vergleich zu Siliziumscheiben, bei denen aufgrund der Kristallachsen erreichbare Konturen streng vorgegeben sind (Pyramidenstümpfe), ist diese flexible Formgebung sehr vorteilhaft.

Das metallische Abscheiden hat besonders im Vergleich zur Herstellung von Siliziumscheiben den Vorteil einer sehr großen Materialvielfalt. Die verschiedensten Metalle mit ihren unterschiedlichen magnetischen Eigenschaften und Härten können bei der zur Herstellung der Drallscheiben verwendeten Mikrogalvanik zum Einsatz kommen. Die unterschiedlichen Härten der verschiedenen Metalle können in besonders vorteilhafter Weise dahingehend genutzt werden, daß ein abdichtender Materialbereich geschaffen ist.

Besonders vorteilhaft ist es, die Drallscheibe bestehend aus drei Schichten aufzubauen, indem drei Galvanikschritte zur Metallabscheidung vorgenommen werden. Dabei stellt die stromaufwärtige Schicht eine Deckelschicht dar, die die Drallkammer einer mittleren Drallerzeugungsschicht vollständig abdeckt. Die Drallerzeugungsschicht wird von einem oder mehreren Materialbereichen gebildet, die aufgrund ihrer Konturgebung und ihrer geometrischen Lage zueinander die Konturen der Drallkammer und der Drallkanäle vorgeben. Durch den Galvanikprozess werden die einzelnen Schichten ohne Trenn- oder Fügestellen so aufeinander aufgebaut; daß sie durchgehend homogenes Material darstellen. Insofern sind "Schichten" als gedankliches Hilfsmittel zu verstehen.

In vorteilhafter Weise sind in der Drallscheibe zwei, drei, vier oder sechs Drallkanäle vorgesehen. Die Materialbereiche können entsprechend der gewünschten Konturgebung der Drallkanäle sehr unterschiedliche Formen besitzen, z.B. stegartig oder spiralförmig sein. In vorteilhafter Weise sind auch die Konturen der Drallkammer, der Deckelschicht und der Auslaßöffnung flexibel gestaltbar.

Die Einstellung der statischen Strömungsmenge erfolgt mit der Drallscheibe durch die Wahl bestimmter Öffnungegeometrien, während der Öffnungswinkel des eigentlichen Strahls bzw. Sprays mit einem Stützelement und der Spraywinkel γ zur Ventillängsachse zur Erzielung einer Schrägabspritzung durch den schrägen Einbau der Drallscheibe eingestellt werden.

Bei motorischem Betrieb tritt allgemein bei der Benzindirekteinspritzung das Problem auf, daß die in den Brennraum ragende stromabwärtige Spitze des Einspritzventils durch Benzinablagerungen verkokt. Bei bisher bekannten in den Brennraum ragenden Einspritzventilen besteht deshalb über ihre Lebensdauer die Gefahr einer negativen Beeinflussung der Sprayparameter (z.B. statische Strömungsmenge, Strahlwinkel), die bis zu einem Ausfall des Einspritzventils führen kann. Durch das Einsetzen einer Multilayergalvanik-Zerstäuberscheibe am stromabwärtigen Ende des Brennstoffeinspritzventils aus den Materialien Nickel oder Nickel-Kobalt wird eine Verkokung in diesem Bereich wirksam verhindert. Geeignete Materialien sind außerdem Kobalt- und Nickeloxide und Oxide von Legierungen der genannten Metalle. Durch den Aufbau der Zerstäuberscheibe aus solchen Materialien wird eine vollständige Verbrennung der Rußpartikel katalysiert und die Ablagerung von Kohlenstoffteilchen verhindert. Katalytische Wirksamkeit zeigen auch die Edelmetalle Ru, Rh, Pd, Os, Ir und Pt bzw. Legierungen dieser Metalle untereinander oder mit anderen Metallen.

Der Schrägeinbau eignet sich auch besonders für aus mehreren Blechen zusammengesetzte Zerstäuberscheiben, insbesondere Drallscheiben.

Weitere Vorteile sind in der nachfolgenden Beschreibung der Ausführungsbeispiele noch näher benannt.

### Zeichnung

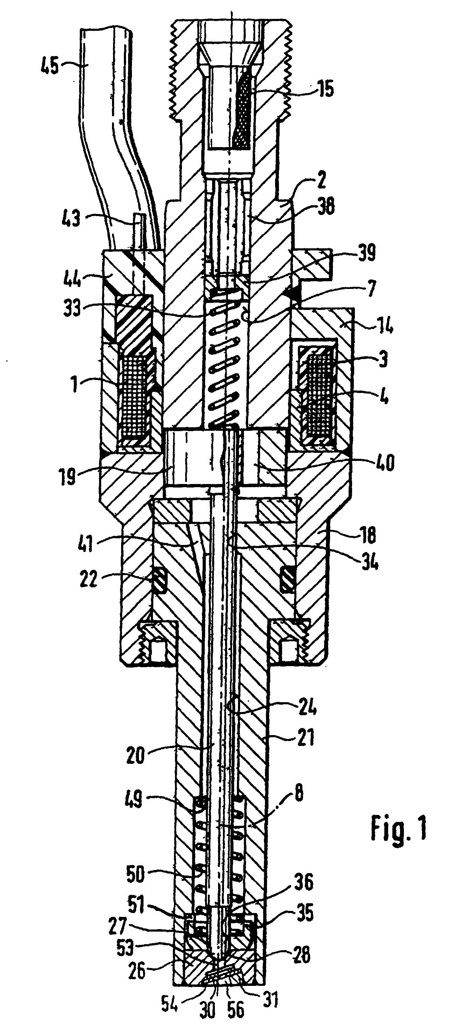

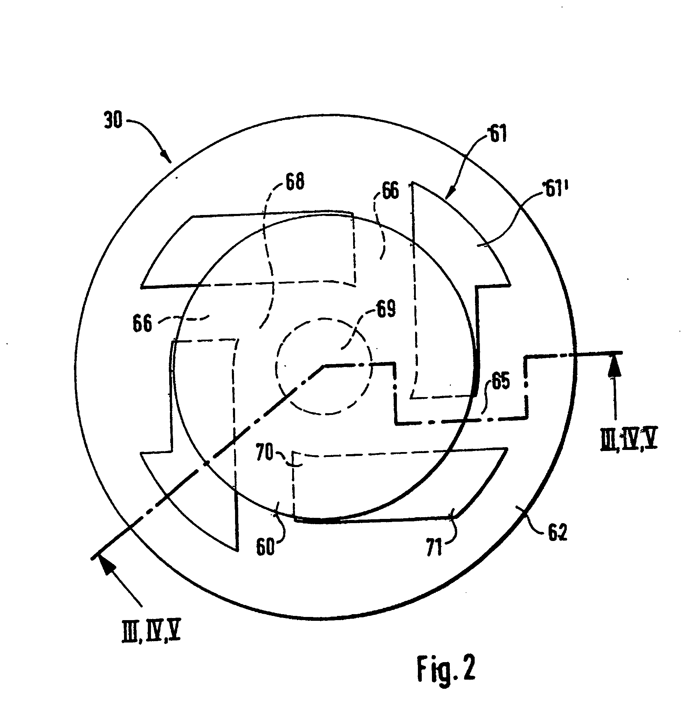

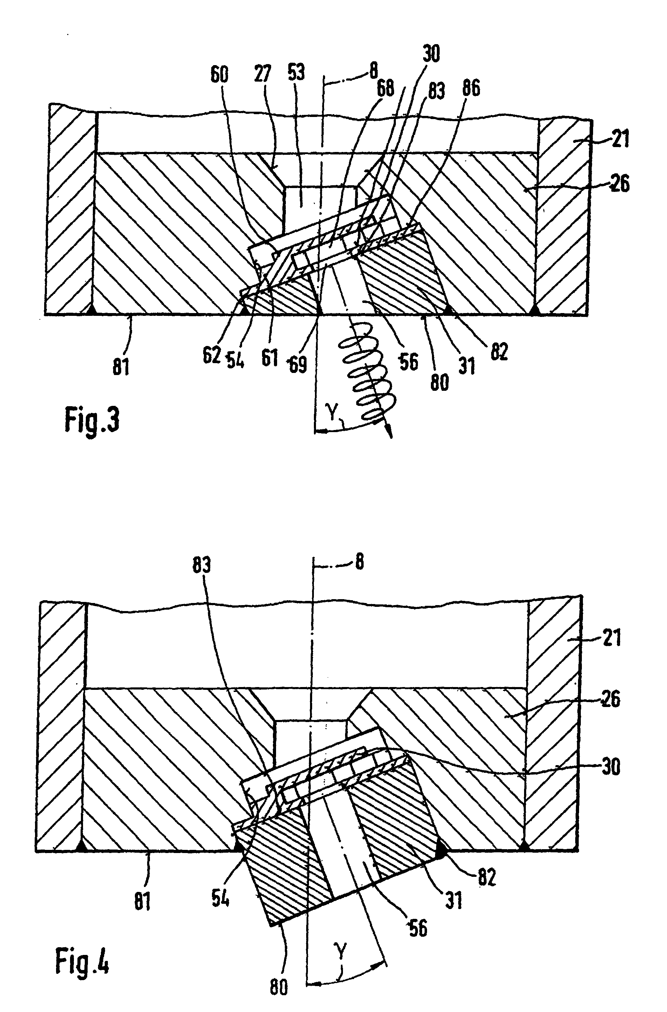

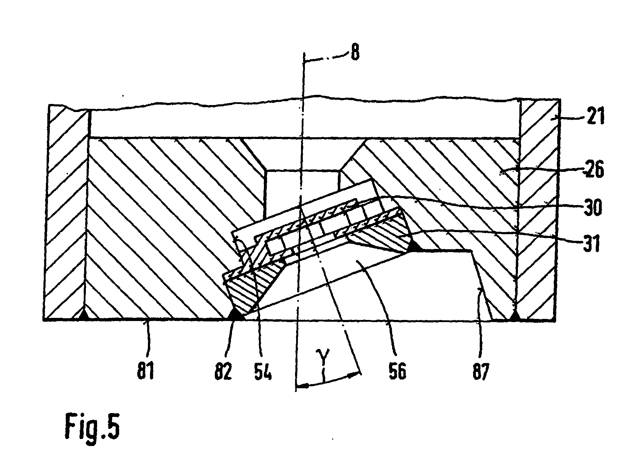

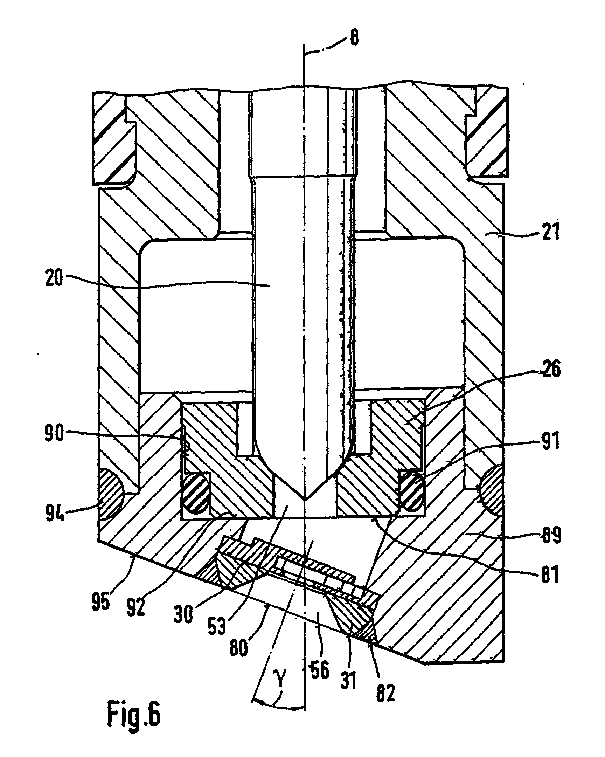

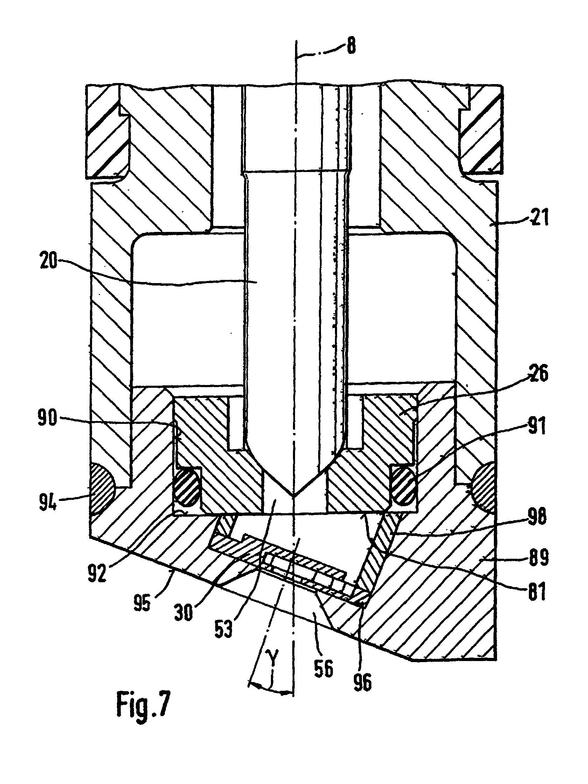

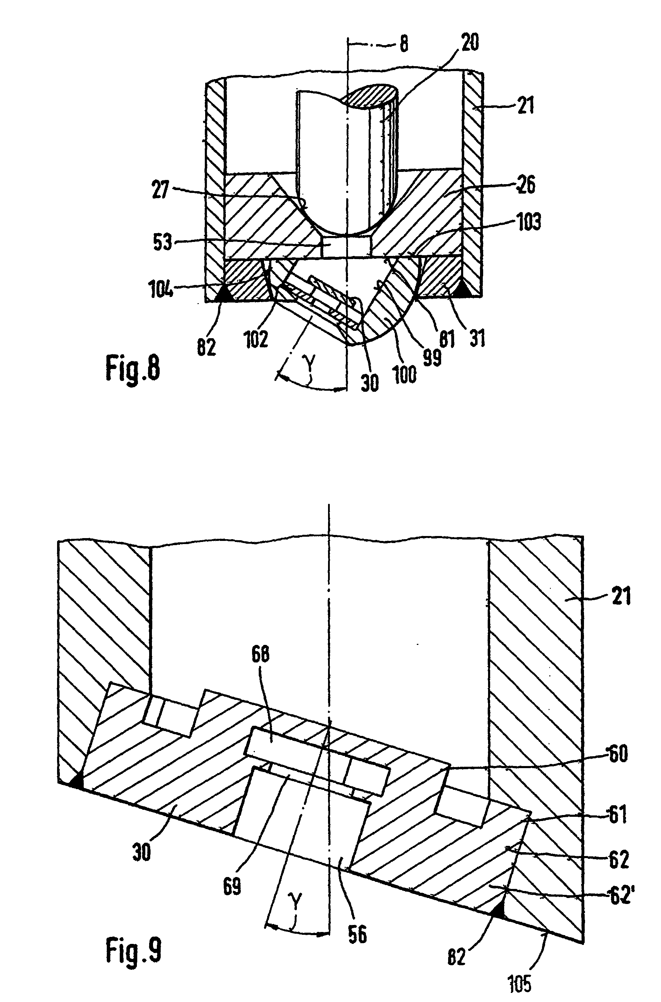

Ausführungsbeispiele der Erfindung sind in der Zeichnung vereinfacht dargestellt und in der nachfolgenden Beschreibung näher erläutert. Es zeigen Figur 1 ein Brennstoffeinspritzventil im Schnitt, Figur 2 eine Draufsicht auf eine im Brennstoffeinspritzventil schräg eingebaute Multilayergalvanik-Drallscheibe, Figur 3 ein erstes Ausführungsbeispiel eines stromabwärtigen Ventilendes, Figur 4 ein zweites Ausführungsbeispiel eines stromabwärtigen Ventilendes, Figur 5 ein drittes Ausführungsbeispiel eines stromabwärtigen Ventilendes, Figur 6 ein viertes Ausführungsbeispiel eines stromabwärtigen Ventilendes, Figur 7 ein fünftes Ausführungsbeispiel eines stromabwärtigen Ventilendes, Figur 8 ein sechstes Ausführungsbeispiel eines stromabwärtigen Ventilendes und Figur 9 ein siebentes Ausführungsbeispiel eines stromabwärtigen Ventilendes, wobei die in den Figuren 3 bis 5 gezeigten Drallscheiben entlang der Linie III-III bzw. IV-IV bzw. V-V in Figur 2 geschnitten sind.

### Beschreibung der Ausführungsbeispiele

Das in der Figur 1 beispielhaft dargestellte elektromagnetisch betätigbare Ventil in der Form eines Einspritzventils für Brennstoffeinspritzanlagen von gemischverdichtenden, fremdgezündeten Brennkraftmaschinen hat einen von einer Magnetspule 1 zumindest teilweise umgebenen, als Innenpol eines Magnetkreises dienenden, rohrförmigen, weitgehend hohlzylindrischen Kern 2. Das Brennstoffeinspritzventil eignet sich besonders als Hochdruckeinspritzventil zum direkten Einspritzen von Brennstoff in einen Brennraum einer Brennkraftmaschine.

Ein beispielsweise gestufter Spulenkörper 3 aus Kunststoff nimmt eine Bewicklung der Magnetspule 1 auf und ermöglicht in Verbindung mit dem Kern 2 und einem ringförmigen, nichtmagnetischen, von der Magnetspule 1 teilweise umgebenen Zwischenteil 4 mit einem L-förmigen Querschnitt einen besonders kompakten und kurzen Aufbau des Einspritzventils im Bereich der Magnetspule 1.

In dem Kern 2 ist eine durchgängige Längsöffnung 7 vorgesehen, die sich entlang einer Ventillängsachse 8 erstreckt. Der Kern 2 des Magnetkreises dient auch als Brennstoffeinlaßstutzen, wobei die Längsöffnung 7 einen Brennstoffzufuhrkanal darstellt. Mit dem Kern 2 oberhalb der Magnetspule 1 fest verbunden ist ein äußeres metallenes (z. B. ferritisches) Gehäuseteil 14, das als Außenpol bzw. äußeres Leitelement den Magnetkreis schließt und die Magnetspule 1 zumindest in Umfangsrichtung vollständig umgibt. In der Längsöffnung 7 des Kerns 2 ist zulaufseitig ein Brennstoffilter 15 vorgesehen, der für die Herausfiltrierung solcher Brennstoffbestandteile sorgt, die aufgrund ihrer Größe im Einspritzventil Verstopfungen oder Beschädigungen verursachen könnten. Der Brennstoffilter 15 ist z. B. durch Einpressen im Kern 2 fixiert.

Der Kern 2 bildet mit dem Gehäuseteil 14 das zulaufseitige Ende des Brennstoffeinspritzventils, wobei sich das obere Gehäuseteil 14 beispielsweise in axialer Richtung stromabwärts gesehen gerade noch über die Magnetspule 1 hinaus erstreckt. An das obere Gehäuseteil 14 schließt sich dicht und fest ein unteres rohrförmiges Gehäuseteil 18 an, das z. B. ein axial bewegliches Ventilteil bestehend aus einem Anker 19 und einer stangenförmigen Ventilnadel 20 bzw. einen langgestreckten Ventilsitzträger 21 umschließt bzw. aufnimmt. Das bewegliche Ventilteil könnte aber z.B. auch die Form einer flachen Scheibe mit integriertem Anker haben. Die beiden Gehäuseteile 14 und 18 sind z. B. mit einer umlaufenden Schweißnaht fest miteinander verbunden.

In dem in Figur 1 dargestellten Ausführungsbeispiel sind das untere Gehäuseteil 18 und der weitgehend rohrförmige Ventilsitzträger 21 durch Verschrauben fest miteinander verbunden; Schweißen, Löten oder Bördeln stellen aber ebenso mögliche Fügeverfahren dar. Die Abdichtung zwischen dem Gehäuseteil 18 und dem Ventilsitzträger 21 erfolgt z. B. mittels eines Dichtrings 22. Der Ventilsitzträger 21 besitzt über seine gesamte axiale Ausdehnung eine innere Durchgangsöffnung 24, die konzentrisch zu der Ventillängsachse 8 verläuft.

Mit seinem unteren Ende 25, das auch zugleich den stromabwärtigen Abschluß des gesamten Brennstoffeinspritzventils darstellt, umgibt der Ventilsitzträger 21 ein in der Durchgangsöffnung 24 eingepaßtes scheibenförmiges Ventilsitzelement 26 mit einer sich stromabwärts kegelstumpfförmig verjüngenden Ventilsitzfläche 27. In der Durchgangsöffnung 24 ist die z. B. stangenförmige, einen weitgehend kreisförmigen Querschnitt aufweisende Ventilnadel 20 angeordnet, die an ihrem stromabwärtigen Ende einen Ventilschließabschnitt 28 aufweist. Dieser beispielsweise sich keglig verjüngende Ventilschließabschnitt 28 wirkt in bekannter Weise mit der im Ventilsitzelement 26 vorgesehenen Ventilsitzfläche 27 zusammen.

Stromabwärts der Ventilsitzfläche 27 folgt in einer Vertiefung 54 des Ventilsitzelements 26 eine erfindungsgemäß schräg eingebaute Zerstäuberscheibe 30 , die in den Ausführungsbeispielen aufgrund ihrer Geometrie und ihrer speziellen Funktionsweise als Drallscheibe 30 bezeichnet ist. Als Schrägeinbau wird dabei verstanden, daß die Zerstäuberscheibe 30 eine Flächennormale besitzt, die unter einem von 0° abweichenden Winkel zur Ventillängsachse 8 verläuft, so daß durch die Ausrichtung der Zerstäuberscheibe 30 ein Strahlwinkel γ zur Ventillängsachse 8 erzielt wird.

Die Drallscheibe 30 ist z.B. mittels Multilayergalvanik hergestellt und umfaßt z.B. drei aufeinander abgeschiedene metallische Schichten. In der Vertiefung 54 ist des weiteren ein der Drallscheibe 30 nachgeordnetes Stützelement 31 eingebracht.

Die Betätigung des Einspritzventils erfolgt beispielsweise in bekannter Weise elektromagnetisch. Zur axialen Bewegung der Ventilnadel 20 und damit zum Öffnen entgegen der Federkraft einer in der Längsöffnung 7 des Kerns 2 angeordneten Rückstellfeder 33 bzw. Schließen des Einspritzventils dient der elektromagnetische Kreis mit der Magnetspule 1, dem Kern 2, den Gehäuseteilen 14 und 18 und dem Anker 19. Der Anker 19 ist mit dem dem Ventilschließabschnitt 28 abgewandten Ende der Ventilnadel 20 z. B. durch eine Schweißnaht verbunden und auf den Kern 2 ausgerichtet. Zur Führung der Ventilnadel 20 während ihrer Axialbewegung mit dem Anker 19 entlang der Ventillängsachse 8 dient einerseits eine im Ventilsitzträger 21 am dem Anker 19 zugewandten Ende vorgesehene Führungsöffnung 34 und andererseits ein stromaufwärts des Ventilsitzelements 26 angeordnetes scheibenförmiges Führungselement 35 mit einer maßgenauen Führungsöffnung 36. Der Anker 19 ist während seiner Axialbewegung von dem Zwischenteil 4 umgeben.

Anstelle des elektromagnetischen Kreises kann auch ein anderer erregbarer Aktuator, wie z.B. ein Piezostack, in einem vergleichbaren Brennstoffeinspritzventil verwendet werden bzw. das Betätigen des axial beweglichen Ventilteils durch einen hydraulischen Druck oder Servodruck erfolgen.

Eine in der Längsöffnung 7 des Kerns 2 eingeschobene, eingepreßte oder eingeschraubte Einsteilhülse 38 dient zur Einstellung der Federvorspannung der über ein Zentrierstück 39 mit ihrer stromaufwärtigen Seite an der Einstellhülse 38 anliegenden Rückstellfeder 33, die sich mit ihrer gegenüberliegenden Seite am Anker 19 abstützt. Im Anker 19 sind ein oder mehrere bohrungsähnliche Strömungskanäle 40 vorgesehen, durch die der Brennstoff von der Längsöffnung 7 im Kern 2 aus über stromabwärts der Strömungskanäle 40 ausgebildete Verbindungskanäle 41 nahe der Führungsöffnung 34 im Ventilsitzträger 21 bis in die Durchgangsöffnung 24 gelangen kann.

Der Hub der Ventilnadel 20 wird durch die Einbaulage des Ventilsitzelements 26 vorgegeben. Eine Endstellung der Ventilnadel 20 ist bei nicht erregter Magnetspule 1 durch die Anlage des Ventilschließabschnitts 28 an der Ventilsitzfläche 27 des Ventilsitzelements 26 festgelegt, während sich die andere Endstellung der Ventilnadel 20 bei erregter Magnetspule 1 durch die Anlage des Ankers 19 an der stromabwärtigen Stirnseite des Kerns 2 ergibt. Die Oberflächen der Bauteile im letztgenannten Anschlagbereich sind beispielsweise verchromt.

Die elektrische Kontaktierung der Magnetspule 1 und damit deren Erregung erfolgt über Kontaktelemente 43, die noch außerhalb des Spulenkörpers 3 mit einer Kunststoffumspritzung 44 versehen sind. Die Kunststoffumspritzung 44 kann sich auch über weitere Bauteile (z. B. Gehäuseteile 14 und 18) des Brennstoffeinspritzventils erstrecken. Aus der Kunststoffumspritzung 44 heraus verläuft ein elektrisches Anschlußkabel 45, über das die Bestromung der Magnetspule 1 erfolgt. Die Kunststoffumspritzung 44 ragt durch das in diesem Bereich unterbrochene obere Gehäuseteil 14.

Stromabwärts der Führungsöffnung 34 ist die Durchgangsöffnung 24 des Ventilsitzträgers 21 beispielsweise zweimal gestuft ausgeführt. Ein erster Absatz 49 dient als Anlagefläche für eine z.B. schraubenförmige Druckfeder 50. Mit der zweiten Stufe 51 wird ein vergrößerter Einbauraum für die zwei scheibenförmigen Elemente 35 und 26 geschaffen. Die die Ventilnadel 20 umhüllende Druckfeder 50 verspannt das Führungselement 35 im Ventilsitzträger 21, da sie mit ihrer dem Absatz 49 gegenüberliegenden Seite gegen das Führungselement 35 drückt. Stromabwärts der Ventilsitzfläche 27 ist im Ventilsitzelement 26 eine Austrittsöffnung 53 eingebracht, durch die der bei geöffnetem Ventil an der Ventilsitzfläche 27 entlangströmende Brennstoff strömt, um nachfolgend in die Drallscheibe 30 und das Stützelement 31 einzutreten. Während das Stützelement 31 fest mit dem Ventilsitzelement 26 z.B. mittels Schweißen oder Kleben verbunden ist, liegt die Drallscheibe 30 in der Vertiefung 54 verspannt bzw. eingeklemmt vor, da das Stützelement 31 die Drallscheibe 30 von unten her abstützt. Die in Figur 1 gezeigte Befestigungsvariante der Drallscheibe 30 ist nur vereinfacht dargestellt und zeigt nur eine von vielen zu variierenden Befestigungsmöglichkeiten, von denen in den Figuren 3 bis 9 weitere zu entnehmen sind. In dem Stützelement 31 ist eine zentrale Auslaßöffnung 56 ausgebildet, durch die der nun drallbehaftete Brennstoff das Brennstoffeinspritzventil verläßt.

Figur 2 zeigt eine Draufsicht auf eine Drallscheibe 30 mit einer von unzählig möglichen Geometrien beispielhaft. Bei einer solchen Drallscheibe 30 handelt es sich um ein einteiliges Bauteil, da die einzelnen Schichten unmittelbar aufeinander abgeschieden und nicht erst nachträglich gefügt werden. Die Schichten der Drallscheibe 30 werden nacheinander galvanisch abgeschieden, so daß sich die Folgeschicht aufgrund galvanischer Haftung fest mit der darunterliegenden Schicht verbindet.

Gebildet wird die Drallscheibe 30 aus drei galvanisch aufeinander abgeschiedenen Ebenen, Lagen bzw. Schichten, die somit im eingebauten Zustand in Strömungsrichtung direkt aufeinander folgen. Bezeichnet werden die drei Schichten der Drallscheibe 30 im folgenden entsprechend ihrer Funktion mit Deckelschicht 60, Drallerzeugungsschicht 61 und Bodenschicht 62. Die obere Deckelschicht 60 ist mit einem kleineren Außendurchmesser als die untere Bodenschicht 62 ausgebildet. Auf diese Weise ist gewährleistet, daß der Brennstoff an der Deckelschicht 60 außen vorbei strömen und so ungehindert in äußere Einlaßbereiche 65 von beispielsweise vier Drallkanälen 66 in der mittleren Drallerzeugungsschicht 61 eintreten kann. Drallscheiben 30 sind auch mit mehr als drei Schichten herstellbar, wobei die Struktur der oben beschriebenen Schichten 60, 61, 62 auch in diesen Fällen in vergleichbarer Weise aussieht, aber z.B. auf der Deckelschicht 60 noch eine vierte (nicht dargestellte) Strukturschicht aufgewachsen ist, die für bestimmte Einbaubedingungen und aus Anströmgründen zweckmäßig sein kann.

Die obere Deckelschicht 60 stellt eine geschlossene metallische Schicht dar, die keine Öffnungsbereiche zum Durchströmen aufweist. In der Drallerzeugungsschicht 61 ist dagegen eine komplexe Öffnungskontur vorgesehen, die über die gesamte axiale Dicke dieser Schicht 61 verläuft. Die Öffnungskontur der mittleren Schicht 61 wird von einer inneren z.B. kreisförmigen Drallkammer 68 und von einer Vielzahl von in die Drallkammer 68 mündenden Drallkanälen 66 gebildet. Durch die tangentiale Einmündung der Drallkanäle 66 in die Drallkammer 68 bekommt der Brennstoff einen Drehimpuls aufgeprägt, der so auch in einer mittleren kreisförmigen Auslaßöffnung 69 der unteren Bodenschicht 62 erhalten bleibt. Der Durchmesser der Auslaßöffnung 69 ist beispielsweise deutlich kleiner als die Öffnungsweite der unmittelbar über ihr liegenden Drallkammer 68. Dadurch wird die in der Drallkammer 68 erzeugte Drallintensität verstärkt. Durch die Fliehkraft wird der Brennstoff hohlkegelförmig abgespritzt.

Die Konturen der Drallkammer 68 und der Drallkanäle 66 werden von Materialbereichen 61' der Drallerzeugungsschicht 61 vorgegeben. Die Materialbereiche 61' sind jeweils stegartig und vom äußeren Rand der Drallscheibe 30 beabstandet ausgebildet. Die vier Materialbereiche 61' stehen zu den jeweils benachbarten Materialbereichen 61' weitgehend senkrecht und bilden in einem definierten Abstand voneinander die von der Deckelschicht 60 abgedeckten Drallkanäle 66. Die die Drallkammer 68 radial begrenzenden Enden 70 der Materialbereiche 61' sind beispielsweise schaufelförmig abgerundet, so daß bereits die Kontur der Materialbereiche 61' zur Drallerzeugung des abzuspritzenden Brennstoffs dient und eine kreisförmige Drallkammer 68 gebildet ist. Die den inneren Enden 70 gegenüberliegenden Enden 71 der Materialbereiche 61' sind z.B. an ihrer Außenkontur ebenfalls abgerundet und beispielsweise auch verbreitert, wodurch ein Fügedurchmesser vorgegeben wird, mit dem die Drallscheibe 30 in einfacher Art und Weise z.B. in der Vertiefung 54 einsetzbar und befestigbar ist (siehe Figuren 3 bis 5).

Die Drallscheibe 30 wird in mehreren metallischen Schichten durch galvanische Abscheidung aufgebaut (Multilayergalvanik). Aufgrund der tiefenlithographischen, galvanotechnischen Herstellung gibt es besondere Merkmale in der Konturgebung, von denen hiermit einige in Kurzform zusammenfassend aufgeführt sind:
- Schichten mit über die Scheibenfläche konstanter Dicke,
- durch die tiefenlithographische Strukturierung weitgehend senkrechte Einschnitte in den Schichten, welche die jeweils durchströmten Hohlräume bilden (fertigungstechnisch bedingte Abweichungen von ca. 3° gegenüber optimal senkrechten Wandungen können auftreten),
- gewünschte Hinterschneidungen und Überdeckungen der Einschnitte durch mehrlagigen Aufbau einzeln strukturierter Metallschichten,
- Einschnitte mit beliebigen, weitgehend achsparallele Wandungen aufweisenden Querschnittsformen,
- einteilige Ausführung der Drallscheibe, da die einzelnen Metallabscheidungen unmittelbar aufeinander erfolgen.

In den folgenden Abschnitten wird nur in Kurzform das Verfahren zur Herstellung der Drallscheiben 30 erläutert. Ausführlich wurden sämtliche Verfahrensschritte der galvanischen Metallabscheidung zur Herstellung einer Lochscheibe bereits in der DE-OS 196 07 288 beschrieben. Charakteristisch für das Verfahren der sukzessiven Anwendung von photolithographischen Schritten (UV-Tiefenlithographie) und anschließender Mikrogalvanik ist, daß es auch in großflächigem Maßstab eine hohe Präzision der Strukturen gewährleistet, so daß es ideal für eine Massenfertigung mit sehr großen Stückzahlen (hohe Batchfähigkeit) einsetzbar ist. Auf einem Nutzen oder Wafer kann eine Vielzahl von Drallscheiben 30 gleichzeitig gefertigt werden.

Ausgangspunkt für das Verfahren ist eine ebene und stabile Trägerplatte, die z. B. aus Metall (Titan, Stahl), Silizium, Glas oder Keramik bestehen kann. Auf die Trägerplatte wird optional zunächst wenigstens eine Hilfsschicht aufgebracht. Dabei handelt es sich beispielsweise um eine Galvanikstartschicht (z. B. TiCuTi, CrCuCr, Ni), die zur elektrischen Leitung für die spätere Mikrogalvanik benötigt wird. Das Aufbringen der Hilfsschicht geschieht z. B. durch Sputtern oder durch stromlose Metallabscheidung. Nach dieser Vorbehandlung der Trägerplatte wird auf die Hilfsschicht ein Photoresist (Photolack) ganzflächig aufgebracht, z.B. aufgewalzt oder aufgeschleudert.

Die Dicke des Photoresists sollte dabei der Dicke der Metallschicht entsprechen, die in dem später folgenden Galvanikprozeß realisiert werden soll, also der Dicke der unteren Bodenschicht 62 der Drallscheibe 30. Die Resistschicht kann aus einer oder mehreren Lagen einer fotostrukturierbaren Folie oder einem Flüssigresist (Polyimid, Photolack) bestehen. Falls optional eine Opferschicht in die später erzeugten Lackstrukturen galvanisiert werden soll, ist die Dicke des Photoresists um die Dicke der Opferschicht zu vergrößern. Die zu realisierende Metallstruktur soll mit Hilfe einer photolithographischen Maske invers in dem Photoresist übertragen werden. Eine Möglichkeit besteht darin, den Photoresist direkt über die Maske mittels UV-Belichtung (Leiterplattenbelichter oder Halbleiterbelichter) zu belichten (UV-Tiefenlithographie) und nachfolgend zu entwickeln.

Die letztlich im Photoresist entstehende Negativstruktur zur späteren Schicht 62 der Drallscheibe 30 wird galvanisch mit Metall (z. B. Ni, NiCo, NiFe, NiW, Cu) aufgefüllt (Metallabscheidung). Das Metall legt sich durch das Galvanisieren eng an die Kontur der Negativstruktur an, so daß die vorgegebenen Konturen formtreu in ihm reproduziert werden. Um die Struktur der Drallscheibe 30 zu realisieren, müssen die Schritte ab dem optionalen Aufbringen der Hilfsschicht entsprechend der Anzahl der gewünschten Schichten wiederholt werden, so daß bei einer dreischichtigen Drallscheibe 30 drei Galvanikschritte vorgenommen werden. Für die Schichten einer Drallscheibe 30 können auch unterschiedliche Metalle verwendet werden, die jedoch nur in einem jeweils neuen Galvanikschritt einsetzbar sind.

Bei der Herstellung der Deckelschicht 60 der Drallscheibe 30 wird Metall sowohl auf den leitenden Materialbereichen 61' als auch auf dem nichtleitenden Photoresist im Bereich der Drallkanäle 66 und der Drallkammer 68 abgeschieden. Hierfür wird eine Startschichtmetallisierung auf dem Resist der vorhergehenden mittleren Schicht 61 aufgetragen. Nach dem Abscheiden der oberen Deckelschicht 60 wird der verbliebene Photoresist aus den Metallstrukturen durch naßchemisches Strippen herausgelöst. Bei glatten, passivierten Trägerplatten (Substraten) lassen sich die Drallscheiben 30 vom Substrat lösen und vereinzeln. Bei Trägerplatten mit guter Haftung der Drallscheiben 30 wird die Opferschicht selektiv zu Substrat und Drallscheibe 30 weggeätzt, wodurch die Drallscheiben 30 von der Trägerplatte abheben und vereinzelt werden können.

In den Figuren 3 bis 9 sind sieben verschiedene Ausführungsbeispiele der erfindungsgemäß ausgestalteten Ventilenden mit schräg eingebauten Drallscheiben 30 dargestellt, die vom grundlegenden Aufbau her dem stromabwärtigen Ventilende in Figur 1 entsprechen.

In der schräg geneigt zur Ventillängsachse 8 eingebrachten und gestuft ausgeführten Vertiefung 54 des Ventilsitzelements 26 sind die Drallscheibe 30 und das Stützelement 31 angeordnet, wobei das Stützelement 31 bei dem Beispiel gemäß Figur 3 mit seiner unteren Stirnseite 80 beispielsweise bündig mit der unteren Stirnseite 81 des Ventilsitzelements 26 abschließt, womit auch zusammen mit dem Ventilsitzträger 21 der stromabwärtige Abschluß des gesamten Brennstoffeinspritzventils gebildet ist. Die feste Verbindung des Stützelements 31 mit dem Ventilsitzelement 26 wird z.B. durch eine ringförmig umlaufende, mittels eines Laser erzeugte Schweißnaht 82 realisiert.

Die Drallscheibe 30 liegt auf der oberen, der Ventilsitzfläche 27 zugewandten Stirnseite 83 des Stützelements 31 auf, wobei die Drallscheibe 30 andererseits mit ihrer unteren Bodenschicht 62 an einem Absatz 86 der Vertiefung 54 in eine unverrückbare Lage gebracht ist. Da die Vertiefung 54 im Bereich oberhalb des Absatzes 86 einen Durchmesser aufweist, der dem Fügedurchmesser der Materialbereiche 61' der Drallscheibe 30 entspricht, ist die Drallscheibe 30 paßgenau in die Vertiefung 54 einsetzbar. Um ein Verrutschen der Drallscheibe 30 zu verhindern, drückt das Stützelement 31 die Drallscheibe 30 an den Absatz 86 der Vertiefung 54 in Richtung zur Ventilsitzfläche 27. Das Stützelement 31 besitzt einen Außendurchmesser, der weitgehend dem Öffnungsdurchmesser der Vertiefung 54 entspricht. Die Vertiefung 54 ist beispielsweise durch Bohren, Drehen, Erodieren oder Prägen eingebracht.

Der Durchmesser der Auslaßöffnung 56 ist beispielsweise nur unwesentlich größer als der Durchmesser der Auslaßöffnung 69 der Drallscheibe 30. Die statische Strömungsmenge wird von der Auslaßöffnung 69 der Drallscheibe 30 bestimmt, während der Durchmesser der Auslaßöffnung 56 u.a. für den Spreizwinkel des abzuspritzenden Sprays verantwortlich ist.

Für die Benzindirekteinspritzung sind beispielsweise aufgrund von bestimmten Einbaubedingungen unmittelbar am Brennraum Einspritzventile von Vorteil, die ein zur Ventillängsachse 8 schräg geneigtes Spray abspritzen. Dabei soll z.B. ein drallbehaftetes, möglichst rotationssymmetrisches Hohlkegelspray mit einer Gleichverteilung über den Hohlkegelumfang erzeugt werden. Mögliche Varianten zur Realisierung solcher Vorgaben sind in den Figuren 3 bis 9 dargestellt. Allen dargestellten Ausführungsbeispielen ist dabei gemeinsam, daß die Drallscheibe 30 schräg geneigt zur Ventillängsachse 8 eingebaut ist, so daß die Auslaßöffnung 69 eine schräge Abspritzrichtung vorgibt, die auch in der ebenfalls schräg geneigt verlaufenden Auslaßöffnung 56 des Stützelements 31 beibehalten bleibt. Die Auslaßöffnung 56 endet somit an der unteren Stirnseite 80 außermittig, wobei die Neigung der Auslaßöffnung 56 den Strahlwinkel des Gesamtsprays zur Ventillängsachse 8 bestimmt. Die Strahlausrichtung ist mit einem Pfeil und γ gekennzeichnet, wobei γ auf den Winkel des Sprays zur Ventillängsachse 8 hindeutet.

In den weiteren Ausführungsbeispielen der nachfolgenden Figuren sind die gegenüber dem in Figur 3 dargestellten Ausführungsbeispiel gleichbleibenden bzw. gleichwirkenden Teile durch die gleichen Bezugszeichen gekennzeichnet und nicht mehr näher erläutert. Es wird im folgenden nur noch auf Unterschiede und Besonderheiten aufmerksam gemacht.

Das Ventilende in Figur 4 ist hauptsächlich durch ein anderes Stützelement 31 gekennzeichnet. Das zylindrisch ausgeführte Stützelement 31 ragt dabei stromabwärts aus der Vertiefung 54 über die untere Stirnseite 81 des Ventilsitzelements 26 hinaus. Die Schweißnaht 82 verläuft aufgrund der Schräglage des Stützelements 31 am Umfang des Stützelements 31 einmal von der Stirnseite 80 bis fast zur Stirnseite 83 und zurück ellipsenförmig.

In Figur 5 ist ein verkürzt ausgebildetes Stützelement 31 dargestellt, das eine sich stromabwärts konisch erweiternde Auslaßöffnung 56 besitzt. Das Stützelement 31 ist vollständig in der Vertiefung 54 untergebracht. Es ragt nur in einem Bereich bis zur unteren Stirnseite 81 des Ventilsitzelements 26. Um die kreisförmig umlaufende Schweißnaht 82 anzubringen, ist die Vertiefung 54 zur Stirnseite 81 hin über einen großen Umfangsbereich mit einer Ausnehmung 87 weiter ausgeformt. Die Schweißnaht 82 erstreckt sich nicht entlang der Stirnseite 81, sondern liegt ringförmig entsprechend der Neigung der Vertiefung 54 bzw. des Stützelements 31 vor. In Abhängigkeit von den Brennraumbedingungen erfolgt die Auswahl der Einbaumöglichkeiten, wobei möglichst eine Verkokung der Ventilspitze verhindert werden soll.

Die Figuren 6 und 7 veranschaulichen ein weiteres Einbauprinzip, bei dem am Ventilende ein zusätzliches Aufnahmeelement 89 verwendet ist. Das Ventilsitzelement 26 besitzt stromabwärts der Austrittsöffnung 53 keine Vertiefung 54. Vielmehr ist das Ventilsitzelement 26 selbst in einer inneren Öffnung 90 mittels eines Dichtrings 91 dichtend in dem Aufnahmeelement 89 eingesetzt und z.B. mittels Laserschweißen, Einpressen, Einschrumpfen, Hartlöten, Diffusionslöten oder Magnetumformen befestigt, wobei es sich mit seiner unteren Stirnseite 81 an einer Stufe 92 abstützt. In stromabwärtiger Richtung gesehen verläuft die Öffnung 90 bis zur Stufe 92 zylindrisch und rotationssymmetrisch zur Ventillängsachse 8, während die Öffnung 90 stromabwärts der Stufe 92 schräg geneigt zur Ventillängsachse 8 verläuft. Dieser untere Abschnitt der Öffnung 90 dient zur Aufnahme der Drallscheibe 30. Im Unterschied zu den bisher beschriebenen Beispielen ist die Drallscheibe 30 nun derart ausgebildet, daß die beiden unteren Schichten 61 und 62 einen äußeren Fügedurchmesser der Drallscheibe 30 vorgeben, so daß diese paßgenau in der Öffnung 90 des Aufnahmeelements 89 anliegen. Das Aufnahmeelement 89 und der Ventilsitzträger 21 sind beispielsweise mit einer umlaufenden Schweißnaht 94 fest verbunden. Das Ventilsitzelement 26 übernimmt auch die Funktion der Führung der Ventilnadel 20, so daß ein Führungselement 35 entfallen kann.

In beiden Ausführungsbeispielen besitzt das Aufnahmeelement 89 eine schräg zur Ventillängsachse 8 geneigte untere Stirnseite 95. Mit dieser Stirnseite 95 schließt auch das Stützelement 31 mit seiner unteren Stirnseite 80 bündig ab, wobei die Befestigung mit der Schweißnaht 82 im Bereich der Stirnseiten 80 und 95 erfolgt (Figur 6). Bei dem Beispiel nach Figur 7 wird auf das Stützelement 31 verzichtet. Die z.B. konische Auslaßöffnung 56 ist nun unmittelbar im Aufnahmeelement 89 vorgesehen. Im unteren geneigten Abschnitt der Öffnung 90 ist nach der Stufe 92 eine weitere Stufe 96 ausgebildet, auf der die Drallscheibe 30 aufliegt, wodurch die Abstützung von unten entfällt. Zwischen der unteren Stirnseite 81 des Ventilsitzelements 26 und der Drallscheibe 30, speziell der äußeren Begrenzung der mittleren Schicht 61, ist jedoch eine rohrförmige Distanzhülse 98 eingebracht, so daß für eine genaue Positionierung der Drallscheibe 30 gesorgt ist. Während die Drallscheibe 30 bei dem Beispiel in Figur 6 von unten eingebaut wird, erfolgt bei dem Beispiel in Figur 7 die Montage von oben.

Bei dem in Figur 8 dargestellten Ausführungsbeispiel ist die Drallscheibe 30 in einer Öffnung 99 eines Kugelteils 100 stromabwärts des Ventilsitzes 27 eingebracht. Für das Kugelteil 100 kann z.B. eine Metallkugel aus der Kugellagerfabrikation verwendet werden, die zentrisch aufgebohrt wird. Die Öffnung 99 wird dabei derart eingeformt, daß ein Absatz 102 gebildet ist, auf dem die Drallscheibe 30 aufliegt. Der Montageablauf wird im folgenden kurz beschrieben. Zuströmseitig wird die vorerst vorliegende Kugel plangeschliffen. Die Flächennormale der plangeschliffenen Ebene 103 ist hierbei um den Winkel γ gegenüber der Achse der in dem Kugelteil 100 eingebrachten Öffnung 99 geneigt. Das Kugelteil 100 wird in ein scheibenförmiges Stützelement 31 eingelegt, das eine sich in stromabwärtiger Richtung konisch verjüngende Aufnahmeöffnung 104 hat. Die Toleranzen des Kugelteils 100 und des Stützelements 31 mit seiner Aufnahmeöffnung 104 sind so ausgelegt, daß die plangeschliffene Ebene 103 bei noch nicht eingepreßtem Kugelteil 100 geringfügig aus dem Stützelement 31 hinausragt.

Das Stützelement 31 wird mit dem eingelegten Kugelteil 100 in den Ventilsitzträger 21 eingeschoben. Dabei wird die Ebene 103 des Kugelteils 100 von unten plan gegen die untere Stirnseite 81 des Ventilsitzelements 26 gedrückt. Durch axiales Verpressen des Stützelements 31 gegen das Ventilsitzelement 26 wird das Kugelteil 100 so weit in die Aufnahmeöffnung 104 eingepreßt, bis die plane Ebene 103 exakt bündig mit dem Stützelement 31 zum Ventilsitzelement 26 hin abschließt. Zwischen das Ventilsitzelement 26 und das Stützelement 31 wird zur Erzielung der geforderten Dichtheit beispielsweise eine Flachdichtung eingelegt oder ein Klebstoff eingebracht. Die feste Verbindung von Stützelement 31 und Ventilsitzträger 21 wird mit der ringförmigen Schweißnaht 82 erzielt.

In Figur 9 ist ein siebentes Ausführungsbeispiel eines Ventilendes mit schräg eingebauter Drallscheibe 30 gezeigt, das sich vor allen Dingen dadurch auszeichnet, daß der Drallscheibe 30 kein zusätzliches Bauteil mit einer Auslaßöffnung 56 nachgeordnet ist. Vielmehr wird die unmittelbare Abspritzung in den Brennraum von der Drallscheibe 30 übernommen. Dazu ist die Drallscheibe 30 vierschichtig ausgeführt, wobei ein wesentlicher Teil der Dicke der Drallscheibe 30 von einer unteren Bodenschicht 62' herrührt, die sich in stromabwärtiger Richtung noch an die Bodenschicht 62 mit der Auslaßöffnung 69 anschließt. Die untere Bodenschicht 62' übernimmt in gewisser Weise die Funktion einer Spritzlochscheibe bzw. der schon beschriebenen Stützelemente 31, da die spritzlochmäßig gestaltete Auslaßöffnung 56 noch in der unteren Bodenschicht 62' der Drallscheibe 30 untergebracht ist. Von der Befestigung her ist dieses Beispiel mit dem der Figur 6 vergleichbar, wobei die Befestigung der Drallscheibe 30 unmittelbar am Ventilsitzträger 21, der hier ebenfalls eine geneigte untere Stirnseite 105 hat, erfolgen kann.

Neben den sehr ausführlich beschriebenen und besonders bevorzugten Drallscheiben 30 sind auch andere Ausführungsarten von Zerstäuberscheiben, wie z.B. einen Versatz von Einlaß und Auslaß aufweisende und somit einen sogenannten S-Schlag erzeugende Scheiben, die metallisch als Multilayergalvanik-Scheiben oder als Blechlaminatscheiben oder aus Silizium gefertigt sein können, oder auch gestanzte Spritzlochscheiben in Brennstoffeinspritzventilen schräg geneigt zur Ventillängsachse 8 einsetzbar. Außer den erläuterten mehrlagigen bzw. mehrschichtigen Zerstäuberscheiben eignen sich auch einlagige Lochscheiben für einen schrägen Einbau im Brennstoffeinspritzventil.

## Patentansprüche

1. Brennstoffeinspritzventil für Brennstoffeinspritzanlagen von Brennkraftmaschinen, insbesondere zum direkten Einspritzen von Brennstoff in einen Brennraum einer Brennkraftmaschine, mit einer Ventillängsachse (8), mit einem Aktuator (1, 2, 14, 18, 19) zur Betätigung eines beweglichen Ventilteils (20), das zum Öffnen und Schließen des Ventils mit einem festen Ventilsitz (27) zusammenwirkt, der an einem Ventilsitzelement (26) ausgebildet ist, und mit einer stromabwärts des Ventilsitzes (27) angeordneten Zerstäuberscheibe (30), **dadurch gekennzeichnet, daß** die Zerstäuberscheibe (30) derart schräg am Brennstoffeinspritzventil eingebaut ist, daß die gesamte Zerstäuberscheibe (30) eine Flächennormale besitzt, die unter einem von 0° abweichenden Winkel zur Ventillängsachse (8) schräg geneigt verläuft, so daß durch die Ausrichtung der Zerstäuberscheibe (30) ein Strahlwinkel γ zur Ventillängsachse (8) erzielt wird.

2. Brennstoffeinspritzventil nach Anspruch 1, **dadurch gekennzeichnet, daß** die Zerstäuberscheibe als Drallscheibe (30) mit einer Drallkammer (68) und wenigstens zwei in sie mündenden Drallkanälen (66) ausgebildet ist.

3. Brennstoffeinspritzventil nach Anspruch 1, **dadurch gekennzeichnet, daß** die Zerstäuberscheibe als S-Typ-Scheibe mit einem Versatz von Einlaß (65) und Auslaß (69) ausgebildet ist.

4. Brennstoffeinspritzventil nach einem der vorhergehenden Ansprüche, **dadurch gekennzeichnet, daß** die Zerstäuberscheibe (30) mehrschichtig ist und die Schichten der Zerstäuberscheibe (30) mittels galvanischer Metallabscheidung (Multilayergalvanik) unmittelbar haftfest aufeinander aufgebaut sind.

5. Brennstoffeinspritzventil nach einem der Ansprüche 1 bis 3, **dadurch gekennzeichnet, daß** die Zerstäuberscheibe (30) mehrlagig ausgeführt ist, indem wenigstens zwei Blechlagen aufeinander aufgebaut sind.

6. Brennstoffeinspritzventil nach einem der vorhergehenden Ansprüche, **dadurch gekennzeichnet, daß** die Zerstäuberscheibe (30) in einer Vertiefung (54) des Ventilsitzelements (26) angeordnet ist.

7. Brennstoffeinspritzventil nach Anspruch 6, **dadurch gekennzeichnet, daß** die Zerstäuberscheibe (30) mit Hilfe eines Stützelements (31) in der Vertiefung (54) befestigt ist.

8. Brennstoffeinspritzventil nach einem der Ansprüche 1 bis 5, **dadurch gekennzeichnet, daß** die Zerstäuberscheibe (30) in einer Öffnung (90) eines Aufnahmeelements (89) stromabwärts des Ventilsitzelements (26) angeordnet ist.

9. Brennstoffeinspritzventil nach Anspruch 8, **dadurch gekennzeichnet, daß** die Zerstäuberscheibe (30) mit Hilfe eines Stützelements (31) oder einer Distanzhülse (98) in der Öffnung (90) befestigt ist.

10. Brennstoffeinspritzventil nach einem der Ansprüche 1 bis 5, **dadurch gekennzeichnet, daß** die Zerstäuberscheibe (30) in einer Öffnung (99) eines Kugelteils (100) stromabwärts des Ventilsitzelements (26) angeordnet ist.

11. Brennstoffeinspritzventil nach Anspruch 10, **dadurch gekennzeichnet, daß** das Kugelteil (100) in einer konischen Aufnahmeöffnung (104) eines Stützelements (31) eingepreßt ist.

12. Brennstoffeinspritzventil nach Anspruch 2, **dadurch gekennzeichnet, daß** die Zerstäuberscheibe als Drallscheibe (30) in Kombination mit einer Spritzlochscheibe (62') ausgeführt ist.

13. Brennstoffeinspritzventil nach einem der vorhergehenden Ansprüche, **dadurch gekennzeichnet, daß** das Ventilsitzelement (26) mittels Laserschweißen, Einpressen, Einschrumpfen, Hartlöten, Diffusionslöten, Kleben oder Magnetumformen in einem Aufnahmeelement (21, 89) befestigt ist.

## Claims

1. Fuel injection valve for fuel injection systems of internal combustion engines, in particular for the direct injection of fuel into a combustion chamber of an internal combustion engine, having a valve longitudinal axis (8), having an actuator (1, 2, 14, 18, 19) for actuating a moveable valve part (20) which, for the purpose of opening and closing the valve, interacts with a fixed valve seat (27) which is formed on a valve seat element (26), and having an atomizing disc (30) arranged downstream of the valve seat (27), **characterized in that** the atomizing disc (30) is fitted obliquely on the fuel injection valve in such a manner that the entire atomizing disc (30) has a surface perpendicular which runs in an obliquely inclined manner with respect to the valve longitudinal axis (8) at an angle differing from 0°, with the result that a spray angle γ with respect to the valve longitudinal axis (8) is obtained by aligning the atomizing disc (30).

2. Fuel injection valve according to Claim 1, **characterized in that** the atomizing disc is designed as a swirl disc (13) having a swirl chamber (68) and at least two swirl ducts (66) leading into it.

3. Fuel injection valve according to Claim 1, **characterized in that** the atomizing disc is designed as an S-type disc with the inlet (65) and outlet (69) offset.

4. Fuel injection valve according to one of the preceding claims, **characterized in that** the atomizing disc (30) is multilayered, and the layers of the atomizing disc (30) are constructed on one another in a directly adhering manner by means of electrodeposition (multilayer electroplating).

5. Fuel injection valve according to one of Claims 1 to 3, **characterized in that** the atomizing disc (30) is of multilayered design by at least two sheet-metal layers being constructed on one another.

6. Fuel injection valve according to one of the preceding claims, **characterized in that** the atomizing disc (30) is arranged in a depression (54) of the valve seat element (26).

7. Fuel injection valve according to Claim 6, **characterized in that** the atomizing disc (30) is fixed in the depression (54) with the aid of a supporting element (31).

8. Fuel injection valve according to one of Claims 1 to 5, **characterized in that** the atomizing disc (30) is arranged downstream of the valve seat element (26) in an opening (90) of a receiving element (89).

9. Fuel injection valve according to Claim 8, **characterized in that** the atomizing disc (30) is fixed in the opening (90) with the aid of a supporting element (31) or a spacer sleeve (98).

10. Fuel injection valve according to one of Claims 1 to 5, **characterized in that** the atomizing disc (30) is arranged downstream of the valve seat element (26) in an opening (99) of a ball part (100).

11. Fuel injection valve according to Claim 10, **characterized in that** the ball part (100) is pressed into a conical receiving opening (104) of a supporting element (31).

12. Fuel injection valve according to Claim 2, **characterized in that** the atomizing disc is designed as a swirl disc (30) in combination with a perforated spray disc (62').

13. Fuel injection valve according to one of the preceding claims, **characterized in that** the valve seat element (26) is fixed in a receiving element (21, 89) by means of laser welding, pressing in, shrinking in, hard soldering, diffusion soldering, bonding or magnetic deformation.

## Revendications

1. Injecteur de carburant pour une installation d'injection dans un moteur à combustion interne, notamment pour l'injection directe de carburant dans la chambre de combustion du moteur, ayant un axe longitudinal (8), un actionneur (1, 2, 14, 18, 19) pour actionner la partie mobile (20) de l'injecteur coopérant avec un siège de soupape fixe (27) pour ouvrir et fermer l'injecteur, ce siège étant réalisé dans un élément formant siège (26), ainsi qu'une pastille de pulvérisation (30) installée en aval du siège de soupape (27),
**caractérisé en ce que**
la pastille de pulvérisation (30) est installée en biais dans l'injecteur de façon que toute la pastille de pulvérisation (30) possède une normale à sa surface qui est inclinée par rapport à l'axe longitudinal (8) de l'injecteur d'un angle différent de 0° pour que l'orientation de la pastille de pulvérisation (30) forme un angle de jet γ par rapport à l'axe longitudinal (8) de l'injecteur.

2. Injecteur selon la revendication 1,
**caractérisé en ce que**
la pastille de pulvérisation est une pastille de rotation (30) comportant une chambre de rotation (68) et au moins deux canaux de mise en rotation (66) débouchant dans la chambre.

3. Injecteur selon la revendication 1,
**caractérisé en ce que**
la pastille de pulvérisation est une pastille de type S avec un décalage entre son entrée (65) et sa sortie (69).

4. Injecteur selon l'une des revendications précédentes,
**caractérisé en ce que**
la pastille de pulvérisation (30) est à plusieurs couches et ces couches sont réalisées par dépôt métallique par électrolyse (dépôt multi-couches par électrolyse) pour s'accrocher directement les unes aux autres.

5. Injecteur selon l'une des revendications 1 à 3,
**caractérisé en ce que**
la pastille de pulvérisation (30) est à plusieurs couches avec au moins deux couches de tôle appliquées l'une sur l'autre.

6. Injecteur selon l'une des revendications précédentes,
**caractérisé en ce que**
la pastille de pulvérisation (30) est placée dans une cavité (54) de l'élément formant siège de soupape (26).

7. Injecteur selon la revendication 6,
**caractérisé en ce que**
la pastille de pulvérisation (30) est fixée dans la cavité (54) d'un élément d'appui (31).

8. Injecteur selon l'une des revendications 1 à 5,
**caractérisé en ce que**
la pastille de pulvérisation (30) est placée dans une ouverture (90) d'un élément de réception (89) en aval de l'élément formant siège de soupape (26).

9. Injecteur selon la revendication 8,
**caractérisé en ce que**
la pastille de pulvérisation (30) est fixée à l'aide d'un élément d'appui (31) ou d'un manchon d'écartement (98) dans l'ouverture (90).

10. Injecteur selon l'une des revendications 1 à 5,
**caractérisé en ce que**
la pastille de pulvérisation (30) est placée dans une ouverture (99) d'une bille (100) en aval de l'élément formant siège de soupape (26).

11. Injecteur selon la revendication 10,
**caractérisé en ce que**
la bille (100) est enfoncée de force dans un logement conique (104) d'un élément d'appui (31).

12. Injecteur selon la revendication 2,
**caractérisé en ce que**
la pastille de pulvérisation est réalisée comme pastille de rotation (30) en combinaison avec une pastille à orifice d'éjection (62').

13. Injecteur selon l'une des revendications précédentes,
**caractérisé en ce que**
l'élément formant siège de soupape (26) est fixé par soudage au laser, enfoncement de force, frettage, soudage, soudage par diffusion, collage ou transformation magnétique dans l'élément de réception (21, 89).
